# EUROPEAN PATENT SPECIFICATION

(11) **EP 3 194 207 B1**
(45) Date of publication and mention of the grant of the patent: **25.12.2019**
(21) Application number: 14901853.3
(22) Date of filing: 19.09.2014
(51) Int. Cl.: B60P 1/54, B62D 21/09, B62D 33/077, B66C 23/44, B62D 21/12

(54) **LORRY WITH LOADER CRANE**
LASTKRAFTWAGEN MIT LADEKRAN
CAMION DOTÉ D'UNE GRUE DE CHARGEMENT

(43) Date of publication of application: 26.07.2017
(73) Proprietor: Cargotec Patenter AB, 341 81 Ljungby (SE)
(72) Inventor: SAENZ DE INESTRILLAS GARCIA, Victor, ES-50016 Zaragoza (ES); FERRER MORANCHO, Joaquin, ES-50016 Zaragoza (ES)
(74) Representative: Bjerkéns Patentbyrå KB (Gävle)
(86) International application number: PCT/SE2014/051082
(87) International publication number: WO 2016/043636

(56) References cited:
- EP-A2- 2 085 295
- WO-A1-2005/002951
- DE-A1-102009 047 458
- DE-U1- 29 800 368
- SE-B- 340 570

## Description

### FIELD OF THE INVENTION AND PRIOR ART

The present invention relates to a lorry comprising a chassis, a subframe mounted on the chassis and a loader crane.

When a loader crane is installed on a lorry, a subframe is normally arranged between the chassis of the lorry and the base of the crane. In order to prevent the subframe from interfering mechanically with different components of the lorry which extend beyond the rear end of the driver's cabin, such as for instance the gearbox, the subframe may be provided with a recess at its front end, i.e. at the end of the subframe facing the driver's cabin. Due to this recess, the subframe will have a weakened section at its front end, i.e. a section which has reduced strength as compared to other sections of the subframe. The loader crane is often mounted closely behind the driver's cabin of the lorry at the front end of the subframe where the subframe has said weakened section. To enable the subframe to stand up to the stresses that it is subjected to, it might be necessary to reinforce the weakened section of the subframe. According to a known solution, the weakened section of the subframe is reinforced by being rigidly connected to the chassis by means of lateral attachment plates so as to form a non-yielding connection between the subframe and the chassis, whereupon the crane base is secured to the subframe using some focalized bolting points at the front and rear parts of the crane base. However, it is rather complicated and costly to secure the subframe to the chassis by means of such lateral attachment plates, due to the fact that the lateral attachment plates have to be custom-made and that a lot of components of the lorry, such as for instance suspension elements and the exhaust pipe, have to be dismounted when the lateral attachment plates are to be fixed to the chassis.

Another proposed solution is to construct the crane base and the front end of the subframe as one single component, i.e. to integrate the crane base with the front end of the subframe. When this component has been fixed to the chassis of the lorry, a subframe extension is welded to it so as to complete the subframe. A disadvantage of this solution is that the loader crane must already be delivered at the assembly site before the assembly work can be started. Furthermore, some of the welding points between said component and the subframe extension are located on the underside of the component and the subframe extension and are therefore difficult to reach, which complicates the assembly work.

EP 2 085 295 A2 discloses a crane installed on a lorry with a subframe arranged between the chassis of the lorry and the base of the crane. The subframe disclosed in EP 2 085 295 A2 is composed of at least two longitudinal struts and several transverse struts provided between and fixed to the longitudinal struts, wherein the crane is fixed to the subframe by means of vertically extending bolts.

### OBJECT OF THE INVENTION

The object of the present invention is to provide an alternative and favourable solution to the above-mentioned problem.

### SUMMARY OF THE INVENTION

According to the present invention, the above-mentioned object is achieved by a lorry having the features defined in claim 1. The lorry of the present invention comprises:
- a chassis;
- a subframe, which is mounted to the chassis and which has a weakened section at its front end due to a recess provided on the underside of the subframe at the front end thereof that is intended to face the driver's cabin of the lorry, this weakened section having a reduced strength as compared to an adjacent section of the subframe; and
- a loader crane, which is provided with a crane base mounted to the subframe at the front end thereof.

The crane base is secured to the subframe by at least a non-yielding first bolted joint and a non-yielding second bolted joint which are arranged on opposite sides of the subframe and configured to form a stiff connection between the crane base and the subframe so that the weakened section of the subframe is reinforced by the crane base, wherein each one of these bolted joints comprises several bolts distributed in the longitudinal direction of the subframe.

With the solution according to the present invention, the weakened section of the subframe is reinforced, not by being rigidly and non-yieldingly connected to the chassis by means of lateral attachment plates, but instead by being rigidly and non-yieldingly connected to the crane base by means of longitudinal bolted joints. Hereby, the subframe may be secured to the chassis in any suitable manner without paying any particular attention to the weakened section of the subframe, for instance by means of conventional shear-yielding connection elements which may be fixed between the chassis and the subframe in a simple and rapid manner. The crane base may, in its turn, be secured to the subframe in a simple and rapid manner by tightening the bolts of said bolted joints. A further advantage with this solution is that the assembly work may be started at the assembly site before the loader crane has been delivered at the assembly site.

According to a preferred embodiment of the invention, the subframe is secured to the chassis by means of shear-yielding connecting elements which are configured to form a flexible connection between the subframe and the chassis. Hereby, the subframe and the chassis are allowed to move somewhat in relation to each other at the interface between them when subjected to bending forces from the load acting on the subframe and they will thereby behave as separate elements when subjected to such bending forces, which in its turn is advantageous with respect to the distribution of the stresses in the subframe and the chassis.

Another embodiment of the invention is characterized in:
- that said first bolted joint comprises an elongated first support member which is provided with through holes for the bolts of the first bolted joint and which is rigidly fixed to the subframe so as to extend in the longitudinal direction thereof, wherein said through holes of the first support member are aligned with corresponding bolt holes provided on the crane base; and
- that said second bolted joint comprises an elongated second support member which is provided with through holes for the bolts of the second bolted joint and which is rigidly fixed to the subframe so as to extend in the longitudinal direction thereof, wherein said through holes of the second support member are aligned with corresponding bolt holes provided on the crane base.

Hereby, the bolted joints may be achieved in a simple manner.

According to another embodiment, each one of said through holes of the first support member has an oblong cross-sectional shape with a main extension in a direction perpendicular to the longitudinal axis of the first support member. Hereby, a loader crane of a specific configuration may be mounted to subframes having slightly different widths without having to alter the positions of the bolts holes on the crane base or having to alter the configuration of the support members included in the bolted joints. This flexibility is of course further increased if also the bolt holes of the second support member are given such an oblong cross-sectional shape.

Further advantages as well as advantageous features of the lorry according to the present invention will appear from the description following below and the dependent claims.

### BRIEF DESCRIPTION OF THE DRAWINGS

With reference to the appended drawings, a specific description of preferred embodiments of the invention cited as examples follows below. In the drawings:
- Fig 1: is a schematic perspective view of a part of a lorry according to an embodiment of the present invention with a loader crane mounted to the chassis of the lorry through a subframe,
- Fig 2: is a perspective view from above of the subframe,
- Fig 3: is a perspective view from below of the subframe,
- Fig 4: is a perspective view of the subframe with other components fixed to it by welding and with one of the components shown in a detail enlargement,
- Fig 5: is a perspective view from above of a first support member included in a first bolted joint provided between the subframe and the base of the loader crane,
- Fig 6: is a perspective view from below of the first support member and other components included in the first bolted joint,
- Fig 7: is a perspective view from below of a second support member and other components included in a second bolted joint provided between the subframe and the base of the loader crane,
- Fig 8: is a schematic perspective view of the subframe fixed to the chassis of the lorry with a shear-yielding connecting element shown in a detail enlargement,
- Fig 9: is a perspective view from below of the loader crane with a part thereof shown in a detail enlargement,
- Fig 10: is a planar view from below of the loader crane,
- Fig 11: is a perspective view of the first bolted joint, and
- Fig 12: is a vertical section through the first bolted joint.

### DETAILED DESCRIPTION OF EMBODIMENTS OF THE INVENTION

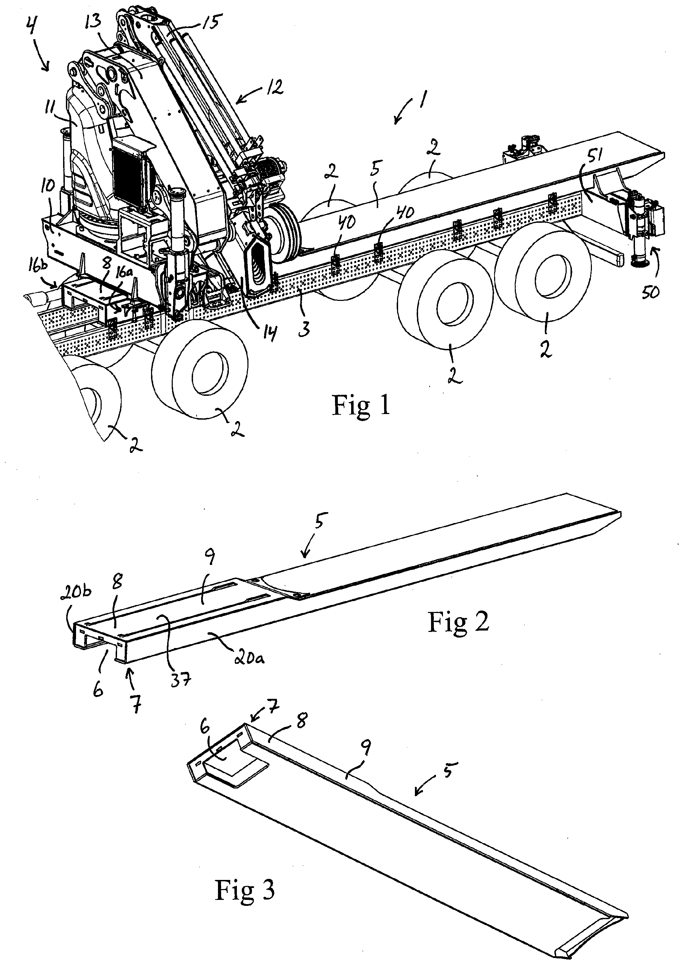

Fig 1 very schematically illustrates a rear part of a lorry 1. For the sake of clarity, several components of the lorry 1 are omitted in Fig 1, such as for instance the driver's cabin and the components of the driveline. The lorry 1 is provided with vehicle wheels 2 and a chassis 3 supported by the vehicle wheels. The lorry 1 is also provided with a loader crane 4, which is mounted to the chassis 3 through a subframe 5.

The subframe 5 is shown in closer detail in Figs 2 and 3. The subframe 5 is to be mounted to the chassis 3 closely behind the driver's cabin. A recess 6 is provided on the underside of the subframe 5 at the front end 7 thereof, i.e. at the end that is intended to face the driver's cabin. This recess 6 is provided in the subframe 5 in order to prevent the subframe from interfering mechanically with components (not shown) of the lorry 1 which extend beyond the rear end of the driver's cabin. Due to this recess 6, the subframe 5 has a weakened section 8 at its front end 7. This weakened section 8 has reduced strength as compared to the adjacent section 9 of the subframe 5.

The loader crane 4 is a hydraulic crane of conventional type and comprises:
- a crane base 10, through which the loader crane rests on the subframe 5;
- a column 11, which is rotatably mounted to the crane base 10 so as to be rotatable in relation to the crane base about an essentially vertical axis of rotation; and
- a crane boom system 12 comprising a number of crane booms 13, 14, 15 which are articulately connected to each other, wherein an inner one 13 of these crane booms is articulately mounted to the column 11.

The column 11 and the crane booms 13, 14, 15 are hydraulically actuated.

The crane base 10 is secured to the subframe 5 by a non-yielding first bolted joint 16a and a non-yielding second bolted joint 16b. The first and second bolted joints 16a, 16b are arranged on opposite sides of the subframe 5 and configured to form a stiff connection between the crane base 10 and the subframe 5. Due to the stiff connection established between the crane base 10 and the subframe 5 by the bolted joints 16a, 16b, the weakened section 8 of the subframe 5 is reinforced by the crane base 10. Each one of the bolted joints 16a, 16b comprises several bolts 17 distributed in the longitudinal direction of the subframe 5, wherein each bolted joint 16a, 16b preferably comprises at least six bolts 17, most preferably at least eight bolts 17, arranged behind each other in a row in the longitudinal direction of the subframe 5. The suitable number of bolts 17 of the first and second bolted joints 16a, 16b depends on the size and the weight of the loader crane 4. In the illustrated embodiment, the first bolted joint 16a comprises eight bolts 17 arranged in a row, whereas the second bolted joint 16b comprises ten bolts 17 arranged in a row.

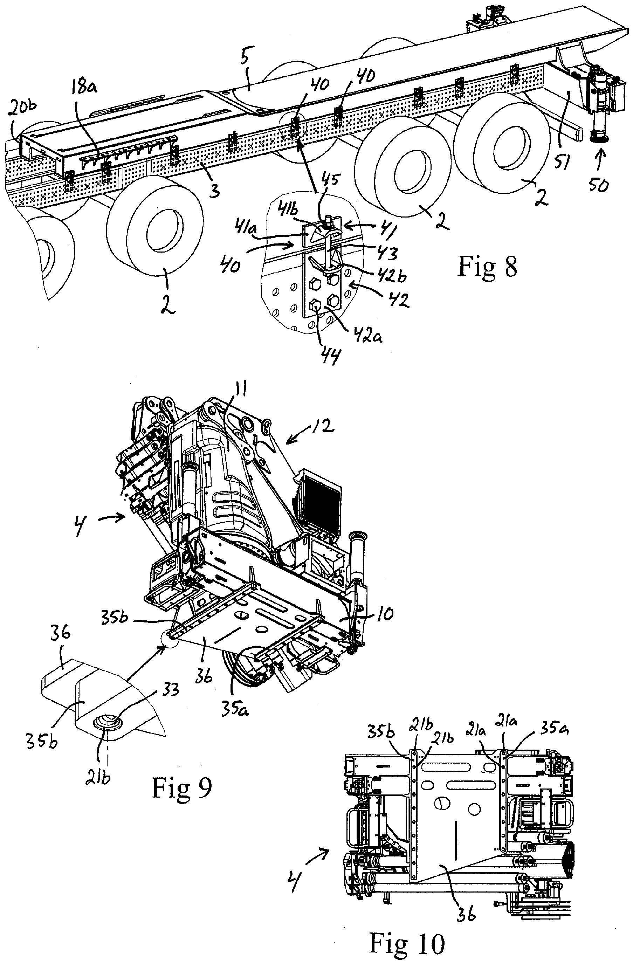

In the illustrated embodiment, the first bolted joint 16a comprises an elongated first support member 18a which is provided with through holes 19 for the bolts 17 of the first bolted joint and which is rigidly fixed to the subframe 5, preferably by welding, so as to extend in the longitudinal direction of the subframe 5. The first support member 18a is fixed to a first vertical and longitudinal side wall 20a of the subframe 5 and projects laterally from this first side wall 20a. The through holes 19 of the first support member 18a are aligned with corresponding bolt holes 21a (see Fig 10) provided on the underside of the crane base 10.

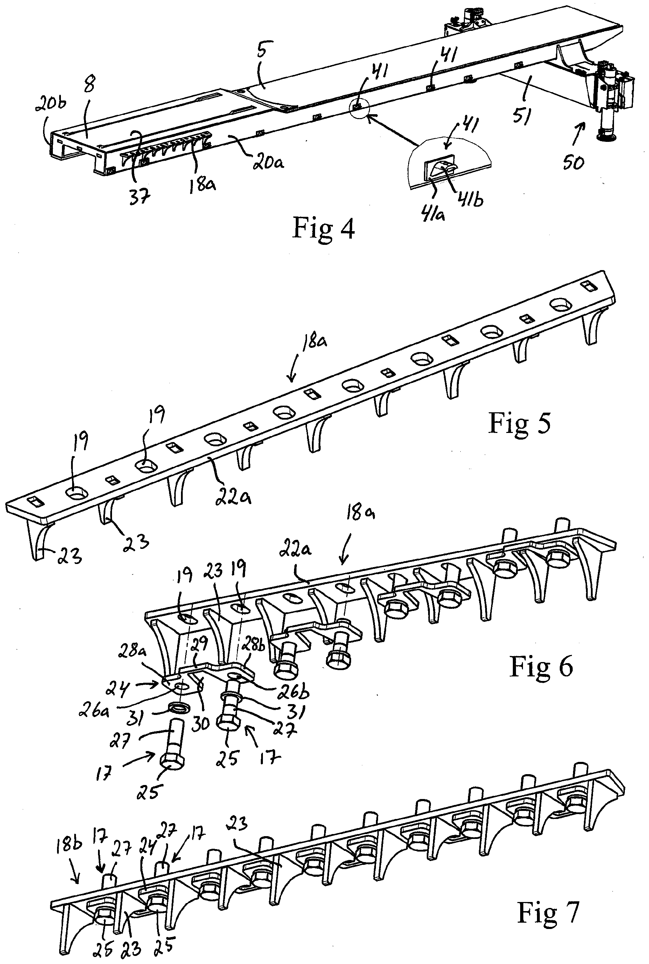

In the illustrated embodiment, the second bolted joint 16b comprises an elongated second support member 18b (see Fig 7) which is provided with through holes 19 for the bolts 17 of the second bolted joint and which is rigidly fixed to the subframe 5, preferably by welding, so as to extend in the longitudinal direction of the subframe 5. The second support member 18b is fixed to a second vertical and longitudinal side wall 20b of the subframe 5 located opposite said first side wall 20a, the second support member 18b projecting laterally from this second side wall 20b. The through holes 19 of the second support member 18b are aligned with corresponding bolt holes 21b provided on the underside of the crane base 10.

In the illustrated example, each support member 18a, 18b comprises a horizontal plate-shaped base part 22a, 22b, which is elongated and provided with the trough holes 19 for the bolts 17, and several vertical support elements 23 for supporting the base part 22a, 22b in relation to the associated side wall 20a, 20b of the subframe 5.

Each one of said through holes 19 of the first and second support members 18a, 18b preferably has an oblong cross-sectional shape with a main extension in a direction perpendicular to the longitudinal axis of the associated support member 18a, 18b. In this case, dual washers 24 are with advantage provided between the first support member 18a and the heads 25 of the bolts 17 received in the through holes 19 of the first support member 18a and between the second support member 18b and the heads 25 of the bolts 17 received in the through holes 19 of the second support member 18b. Each one of these dual washers 24 has a circular first through hole 26a for receiving the bolt shaft 27 of one of said bolts 17 and a circular second through hole 26b for receiving the bolt shaft 27 of another one of said bolts 17. In the illustrated example, the first and second through holes 26a, 26b of a dual washer 24 are located in two separate parts 28a, 28b of the washer which are connected to each other by a connecting piece 29 so as to form a recess 30 between the two parts 28a, 28b and thereby enable these two parts 28a, 28b to be positioned on either side of one of the above-mentioned support elements 23. A lock washer 31 is with advantage arranged between the head 25 of each bolt 17 and the associated washer 24. As an alternative to dual washers 24, it is of course also possible to use single-type washers with only one through hole for the bolt shaft 27 of a bolt 17.

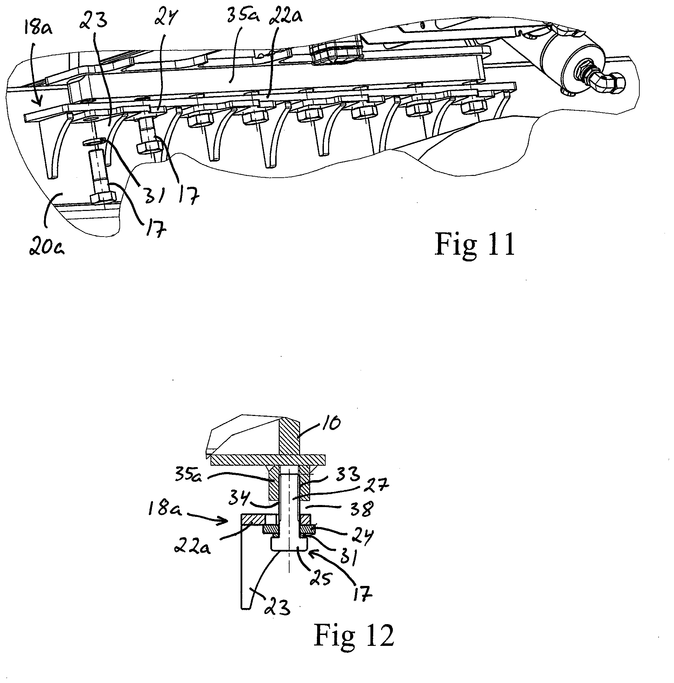

In the illustrated embodiment, each one of the above-mentioned bolt holes 21a, 21b on the crane base 10 is provided with an internal thread 33 (see Figs 9 and 12) configured for engagement with an external thread 34 provided on the bolt shaft 27 of an associated bolt 17. In the illustrated example, the first bolted joint 16a comprises an elongated first mounting member 35a (see Figs 9-12) in the form of a bar or a plate, which is rigidly fixed to the crane base 10 on the underside thereof, preferably by welding, and which is provided with the threaded bolt holes 21a for the bolts 17 of the first bolted joint. In the corresponding manner, the second bolted joint 16b comprises an elongated second mounting member 35b in the form of a bar or a plate, which is rigidly fixed to the crane base 10 on the underside thereof, preferably by welding, and which is provided with the threaded bolt holes 21b for the bolts 17 of the second bolted joint. The mounting members 35a, 35b project downwards from a bottom plate 36 of the crane base 10, this bottom plate 36 being configured to rest against an upper surface 37 of the subframe 5 when the crane base 10 has been mounted to the subframe. The support members 18a, 18b are preferably fixed to the subframe 5 at such a height that there remains a small gap 38 between the upper surface of each support member 18a, 18b and the lower surface of the associated mounting member 35a, 35b when a suitable tightening torque has been applied to the bolts 17 of the bolted joints, as illustrated in Fig 12.

The subframe 5 is preferably secured to the chassis 3 by means of shear-yielding connecting elements 40 (see Figs 1 and 8) in order to form a flexible connection between the subframe 5 and the chassis 3. In the illustrated embodiment, each one of said shear-yielding connecting elements 40 comprises a first holding member 41 (see Fig 8) fixed to the subframe 5, a second holding member 42 fixed to the chassis 3 and an elongated connecting member 43 extending between the first and second holding members 41, 42. The first holding member 41 may be fixed to one of the above-mentioned longitudinal side walls 20a, 20b of the subframe 5, as illustrated in Fig 8. If the subframe 5 is wider than the chassis 3, the first holding member 41 may as an alternative be fixed to a bottom surface of the subframe 5. The connecting member 43 is at a first end fixed to the first holding member 41 and at the opposite second end fixed to the second holding member 42. In the illustrated example, each holding member 41, 42 comprises a plate-shaped first part 41a, 42a and a second part 41b, 42b which is fixed to the first part and projects laterally therefrom. The first part 41a of the first holding member 41 is preferably fixed to the subframe 5 by welding and the first part 42a of the second holding member 42 is fixed to the chassis 3 by means of bolts 44 or by welding. The connecting member 43 has a circular cross-sectional shape. In the illustrated example, the connecting member 43 has the form of a bolt with a bolt head which rests against the second part 41b, 42b of one of the holding members 41, 42 and with a bolt shaft which extends through a through hole in the second part 41b of the first holding member 41 and through an opposite through hole in the second part 42b of the second holding member 42, wherein the connecting member 43 is fixed to the holding members 41, 42 by means of a nut 45 engaged with an external thread at the end of the bolt shaft.

The subframe 5, the components of the first and second bolted joints 16a, 16b and the components of the shear-yielding connecting elements 40 are of metallic material, for instance steel.

When the loader crane 4 is to be mounted to the lorry 1, the first and second support members 18a, 18b included in the first and second bolted joints 16a, 16b and the first holding members 41 included in the shear-yielding connecting elements 40 are in a first step fixed to the subframe 5 by welding, as illustrated in Fig 4. In the illustrated example, the cross bar 51 of a support leg arrangement 50 is also fixed to the subframe 5 by welding in this first step. This first step may be carried out at the assembly site before the loader crane 4 has been delivered at the assembly site. Furthermore, all the welding zones on the subframe 5 are easily accessible since no loader crane is positioned on the subframe when the welding work is carried out. When all the required components have been welded to the subframe 5, the welded assembly may be painted in a second step. In a subsequent third step, the subframe 5 is fixed to the chassis 3 by means of the shear-yielding connecting elements 40, as illustrated in Fig 8, or by means of any other suitable type of connecting elements. In the next step, the crane base 10 is fixed to the subframe 5 by means of the first and second bolted joints 16a, 16b. As an alternative, the crane base 10 may be fixed to the subframe 5 by means of the bolted joints 16a, 16b before the subframe 5 is fixed to the chassis 3.

The invention is of course not in any way restricted to the embodiments described above. On the contrary, many possibilities to modifications thereof will be apparent to a person with ordinary skill in the art without departing from the scope of the invention as defined in the appended claims.

## Claims

1. A lorry comprising:
- a chassis (3);
- a subframe (5), which is mounted to the chassis (3) and which has a weakened section (8) at its front end (7) due to a recess (6) provided on the underside of the subframe (5) at the front end (7) thereof that is intended to face the driver's cabin of the lorry, this weakened section (8) having a reduced strength as compared to an adjacent section (9) of the subframe (5); and
- a loader crane (4), which is provided with a crane base (10) mounted to the subframe (5) at the front end (7) thereof, the crane base (10) being secured to the subframe (5) by at least a non-yielding first bolted joint (16a) and a non-yielding second bolted joint (16b) which are arranged on opposite sides of the subframe (5) and configured to form a stiff connection between the crane base (10) and the subframe (5) so that the weakened section (8) of the subframe (5) is reinforced by the crane base (10), wherein each one of these bolted joints (16a, 16b) comprises several bolts (17) distributed in the longitudinal direction of the subframe (5).

2. A lorry according to claim 1, **characterized in that** the subframe (5) is secured to the chassis (3) by means of shear-yielding connecting elements (40) which are configured to form a flexible connection between the subframe (5) and the chassis (3).

3. A lorry according to claim 2, **characterized in that** each one of said shear-yielding connecting elements (40) comprises a first holding member (41) fixed to the subframe (5), a second holding member (42) fixed to the chassis (3) and an elongated connecting member (43), which has a first end and an opposite second end and extends between the first and second holding members (41, 42), wherein the connecting member (43) at its first end is fixed to the first holding member (41) and at its second end is fixed to the second holding member (42).

4. A lorry according to claim 3, **characterized in that** said first holding member (41) is fixed to the subframe (5) by welding.

5. A lorry according to any of claims 1-4, **characterized in that** each one of said bolted joints (16a, 16b) comprises at least six bolts (17), preferably at least eight bolts (17), arranged behind each other in a row in the longitudinal direction of the subframe (5).

6. A lorry according to any of claims 1-5, **characterized in:**
- **that** said first bolted joint (16a) comprises an elongated first support member (18a) which is provided with through holes (19) for the bolts (17) of the first bolted joint and which is rigidly fixed to the subframe (5) so as to extend in the longitudinal direction thereof, wherein said through holes (19) of the first support member (18a) are aligned with corresponding bolt holes (21a) provided on the crane base (10); and
- **that** said second bolted joint (16b) comprises an elongated second support member (18b) which is provided with through holes (19) for the bolts (17) of the second bolted joint and which is rigidly fixed to the subframe (5) so as to extend in the longitudinal direction thereof, wherein said through holes (19) of the second support member (18b) are aligned with corresponding bolt holes (21b) provided on the crane base (10).

7. A lorry according to claim 6, **characterized in that** each one of said through holes (19) of the first support member (18a) has an oblong cross-sectional shape with a main extension in a direction perpendicular to the longitudinal axis of the first support member (18a).

8. A lorry according to claim 7, **characterized in that** dual washers (24) are provided between the first support member (18a) and the heads (25) of the bolts (17) received in the through holes (19) of the first support member, wherein each one of these dual washers (24) has a circular first through hole (26a) for receiving the bolt shaft (27) of one of said bolts (17) and a circular second through hole (26b) for receiving the bolt shaft (27) of another one of said bolts (17).

9. A lorry according to any of claims 6-8, **characterized in that** each one of said through holes (19) of the second support member (18b) has an oblong cross-sectional shape with a main extension in a direction perpendicular to the longitudinal axis of the second support member (18b).

10. A lorry according to claim 9, **characterized in that** dual washers (24) are provided between the second support member (18b) and the heads (25) of the bolts (17) received in the through holes (19) of the second support member, wherein each one of these dual washers (24) has a circular first through hole (26a) for receiving the bolt shaft (27) of one of said bolts (17) and a circular second through hole (26b) for receiving the bolt shaft (27) of another one of said bolts (17).

11. A lorry according to any of claims 6-10, **characterized in that** each one of said bolt holes (21a, 21b) on the crane base (10) is provided with an internal thread (33) configured for engagement with an external thread (34) on the bolt shaft (27) of an associated bolt (17).

12. A lorry according to claim 11, **characterized in:**
- **that** said first bolted joint (16a) comprises an elongated first mounting member (35a) in the form of a bar or a plate, which is rigidly fixed to the crane base (10) on the underside thereof and which is provided with threaded bolt holes (21a) for the bolts (17) of the first bolted joint; and
- **that** said second bolted joint (16b) comprises an elongated second mounting member (35b) in the form of a bar or a plate, which is rigidly fixed to the crane base (10) on the underside thereof and which is provided with threaded bolt holes (21b) for the bolts (17) of the second bolted joint.

13. A lorry according to any of claims 6-12, **characterized in that** the first and second support members (18a, 18b) are fixed to the subframe (5) by welding.

## Patentansprüche

1. Lastkraftwagen, der umfasst:
- ein Fahrwerk (3);
- einen Unterbau (5), der an dem Fahrwerk (3) montiert ist und der einen geschwächten Abschnitt (8) an seinem Vorderende (7) aufgrund einer Ausnehmung (6) aufweist, die an der Unterseite des Unterbaus (5) an seinem Vorderende (7) bereitgestellt ist, das der Fahrerkabine des Lastkraftwagens zugewandt sein soll, wobei dieser geschwächte Abschnitt (8) im Vergleich mit einem benachbarten Abschnitt (9) des Unterbaus (5) eine reduzierte Festigkeit aufweist; und
- einen Ladekran (4), der mit einer Kranbasis (10) versehen ist, die an dem Unterbau (5) an dessen Vorderende (7) montiert ist, wobei die Kranbasis (10) an dem Unterbau (5) durch mindestens eine unnachgiebige erste Schraubverbindung (16a) und eine unnachgiebige zweite Schraubverbindung (16b) befestigt ist, welche an entgegengesetzten Seiten des Unterbaus (5) angeordnet sind und ausgestaltet sind, um eine steife Verbindung zwischen der Kranbasis (10) und dem Unterbau (5) auszubilden, sodass der geschwächte Abschnitt (8) des Unterbaus (5) durch die Kranbasis (10) verstärkt wird, wobei jede dieser Schraubverbindungen (16a, 16b) mehrere Schrauben (17) umfasst, die in der Längsrichtung des Unterbaus (5) verteilt sind.

2. Lastkraftwagen nach Anspruch 1, **dadurch gekennzeichnet, dass** der Unterbau (5) an dem Fahrwerk (3) mithilfe von schernachgiebigen Verbindungselementen (40) befestigt ist, die ausgestaltet sind, um eine flexible Verbindung zwischen dem Unterbau (5) und dem Fahrwerk (3) auszubilden.

3. Lastkraftwagen nach Anspruch 2, **dadurch gekennzeichnet, dass** jedes der schernachgiebigen Verbindungselemente (40) ein an dem Unterbau (5) befestigtes erstes Halteelement (41), ein an dem Fahrwerk (3) befestigtes zweites Halteelement (42) und ein längliches Verbindungselement (43) umfasst, welches ein erstes Ende und ein entgegengesetztes zweitens Ende aufweist und sich zwischen dem ersten und zweiten Halteelement (41, 42) erstreckt, wobei das Verbindungselement (43) an seinem ersten Ende an dem ersten Halteelement (41) befestigt ist und an seinem zweiten Ende an dem zweiten Halteelement (42) befestigt ist.

4. Lastkraftwagen nach Anspruch 3, **dadurch gekennzeichnet, dass** das erste Halteelement (41) durch Schweißen an dem Unterbau (5) befestigt ist.

5. Lastkraftwagen nach einem der Ansprüche 1-4, **dadurch gekennzeichnet, dass** jede der Schraubverbindungen (16a, 16b) mindestens sechs Schrauben (17), vorzugsweise mindestens acht Schrauben (17), umfasst, die hintereinander in einer Reihe in der Längsrichtung des Unterbaus (5) angeordnet sind.

6. Lastkraftwagen nach einem der Ansprüche 1-5, **dadurch gekennzeichnet:**
- **dass** die erste Schraubverbindung (16a) ein längliches erstes Stützelement (18a) umfasst, welches mit Durchgangslöchern (19) für die Schrauben (17) der ersten Schraubverbindung versehen ist und welches an dem Unterbau (5) starr so befestigt ist, dass es sich in die Längsrichtung desselben erstreckt, wobei die Durchgangslöcher (19) des ersten Stützelements (18a) auf entsprechende Schraubenlöcher (21a) ausgerichtet sind, die an der Kranbasis (10) bereitgestellt sind; und
- **dass** die zweite Schraubverbindung (16b) ein längliches zweites Stützelement (18b) umfasst, welches mit Durchgangslöchern (19) für die Schrauben (17) der zweiten Schraubverbindung versehen ist und welches an dem Unterbau (5) starr so befestigt ist, dass es sich in die Längsrichtung desselben erstreckt, wobei die Durchgangslöcher (19) des zweiten Stützelements (18b) auf entsprechende Schraubenlöcher (21b) ausgerichtet sind, die an der Kranbasis (10) bereitgestellt sind.

7. Lastkraftwagen nach Anspruch 6, **dadurch gekennzeichnet, dass** jedes der Durchgangslöcher (19) des ersten Stützelements (18a) eine längliche Querschnittsgestalt mit einer Hauptausdehnung in eine Richtung rechtwinklig zu der Längsachse des ersten Stützelements (18a) aufweist.

8. Lastkraftwagen nach Anspruch 7, **dadurch gekennzeichnet, dass** doppelte Beilagscheiben (24) zwischen dem ersten Stützelement (18a) und den Köpfen (25) der Schrauben (17), die in den Durchgangslöchern (19) des ersten Stützelements aufgenommen sind, bereitgestellt sind, wobei jede dieser doppelten Beilagscheiben (24) ein kreisförmiges erstes Durchgangsloch (26a) zur Aufnahme des Schraubenschafts (27) einer der Schrauben (17) und ein kreisförmiges zweites Durchgangsloch (26b) zur Aufnahme des Schraubenschafts (27) einer anderen der Schrauben (17) aufweist.

9. Lastkraftwagen nach einem der Ansprüche 6-8, **dadurch gekennzeichnet, dass** jedes der Durchgangslöcher (19) des zweiten Stützelements (18b) eine längliche Querschnittsgestalt mit einer Hauptausdehnung in eine Richtung rechtwinklig zu der Längsachse des zweiten Stützelements (18b) aufweist.

10. Lastkraftwagen nach Anspruch 9, **dadurch gekennzeichnet, dass** doppelte Beilagscheiben (24) zwischen dem zweiten Stützelement (18b) und den Köpfen (25) der Schrauben (17), die in den Durchgangslöchern (19) des zweiten Stützelements aufgenommen sind, bereitgestellt sind, wobei jede dieser doppelten Beilagscheiben (24) ein kreisförmiges erstes Durchgangsloch (26a) zur Aufnahme des Schraubenschafts (27) einer der Schrauben (17) und ein kreisförmiges zweites Durchgangsloch (26b) zur Aufnahme der des Schraubenschafts (27) einer anderen der Schrauben (17) aufweist.

11. Lastkraftwagen nach einem der Ansprüche 6-10, **dadurch gekennzeichnet, dass** jedes der Schraubenlöcher (21a, 21b) an der Kranbasis (10) mit einem Innengewinde (33) versehen ist, das zum Eingriff mit einem Außengewinde (34) an dem Schraubenschaft (27) einer zugehörigen Schraube (17) ausgestaltet ist.

12. Lastkraftwagen nach Anspruch 11, **dadurch gekennzeichnet:**
- **dass** die erste Schraubverbindung (16a) ein längliches erstes Montageelement (35a) in der Form einer Schiene oder einer Platte umfasst, welches an der Kranbasis (10) an der Unterseite derselben starr befestigt ist und welches mit Gewindeschraubenlöchern (21a) für die Schrauben (17) der ersten Schraubverbindung versehen ist; und
- **dass** die zweite Schraubverbindung (16b) ein längliches zweites Montageelement (35b) in der Form einer Schiene oder einer Platte umfasst, welches an der Kranbasis (10), an deren Unterseite starr befestigt ist und welches mit Gewindeschraubenlöchern (21b) für die Schrauben (17) der zweiten Schraubverbindung versehen ist.

13. Lastkraftwagen nach einem der Ansprüche 6-12, **dadurch gekennzeichnet, dass** das erste und zweite Stützelement (18a, 18b) durch Schweißen an dem Unterbau (5) befestigt sind.

## Revendications

1. Camion comprenant :
- un châssis (3) ;
- un sous-châssis (5) qui est monté sur le châssis (3) et qui a une section affaiblie (8) à son extrémité avant (7) en raison d'un évidement (6) prévu sur le dessous du sous-châssis (5) à l'extrémité avant (7) de celui-ci qui est destinée à faire face à la cabine du conducteur du camion, cette section affaiblie (8) ayant une force réduite par rapport à une section adjacente (9) du sous-châssis (5) ; et
- une grue de chargement (4), qui est pourvue d'une base de grue (10) montée sur le sous-châssis (5) à l'extrémité avant (7) de celui-ci, la base de grue (10) étant sécurisée au sous-châssis (5) par au moins un premier raccord boulonné non élastique (16a) et un deuxième raccord boulonné non élastique (16b) qui sont agencés sur des côtés opposés du sous-châssis (5) et configurés pour former un raccordement rigide entre la base de grue (10) et le sous-châssis (5) de sorte que la section affaiblie (8) du sous-châssis (5) soit renforcée par la base de grue (10), dans lequel chacun de ces raccords boulonnés (16a, 16b) comprend plusieurs boulons (17) répartis dans la direction longitudinale du sous-châssis (5).

2. Camion selon la revendication 1, **caractérisé en ce que** le sous-châssis (5) est sécurisé au châssis (3) au moyen d'éléments de raccordement déformables en cisaillement (40) qui sont configurés pour former un raccordement souple entre le sous-châssis (5) et le châssis (3).

3. Camion selon la revendication 2, **caractérisé en ce que** chacun desdits éléments de raccordement déformables en cisaillement (40) comprend un premier organe de maintien (41) fixé au sous-châssis (5), un deuxième organe de maintien (42) fixé au châssis (3) et un organe de raccordement allongé (43), ayant une première extrémité et une deuxième extrémité opposée et s'étendant entre les premier et deuxième organes de maintien (41, 42), dans lequel l'organe de raccordement (43) à sa première extrémité est fixé au premier organe de maintien (41) et à sa deuxième extrémité est fixé au deuxième organe de maintien (42).

4. Camion selon la revendication 3, **caractérisé en ce que** ledit premier organe de maintien (41) est fixé au sous-châssis (5) par soudage.

5. Camion selon l'une quelconque des revendications 1 à 4, **caractérisé en ce que** chacun des raccords boulonnés (16a, 16b) comprend au moins six boulons (17), de préférence au moins huit boulons (17), agencés l'un derrière l'autre en ligne dans la direction longitudinale du sous-châssis (5).

6. Camion selon l'une quelconque des revendications 1 à 5, **caractérisé en ce que** :
- ledit premier raccord boulonné (16a) comprend un premier organe de support allongé (18a) qui est pourvu de trous traversants (19) pour les boulons (17) du premier raccord boulonné et qui est fixé rigidement au sous-châssis (5) de manière à s'étendre dans la direction longitudinale de celui-ci, dans lequel lesdits trous traversants (19) du premier organe de support (18a) sont alignés avec des trous de boulon correspondants (21a) prévus sur la base de grue (10) ; et
- ledit deuxième raccord boulonné (16b) comprend un deuxième organe de support allongé (18b) qui est pourvu de trous traversants (19) pour les boulons (17) du deuxième raccord boulonné et qui est fixé rigidement au sous-châssis (5) de manière à s'étendre dans la direction longitudinale de celui-ci, dans lequel lesdits trous traversants (19) du deuxième organe de support (18b) sont alignés avec des trous de boulon correspondants (21b) prévus sur la base de grue (10).

7. Camion selon la revendication 6, **caractérisé en ce que** chacun desdits trous traversants (19) du premier organe de support (18a) a une forme de coupe transversale oblongue avec une extension principale dans une direction perpendiculaire à l'axe longitudinal du premier organe de support (18a).

8. Camion selon la revendication 7, **caractérisé en ce que** des rondelles doubles (24) sont prévues entre le premier organe de support (18a) et les têtes (25) des boulons (17) reçus dans les trous traversants (19) du premier organe de support, dans lequel chacune de ces rondelles doubles (24) a un premier trou traversant circulaire (26a) pour recevoir la tige de boulon (27) de l'un desdits boulons (17), et un deuxième trou traversant circulaire (26b) pour recevoir la tige de boulon (27) d'un autre desdits boulons (17).

9. Camion selon l'une quelconque des revendications 6 à 8, **caractérisé en ce que** chacun desdits trous traversants (19) du deuxième organe de support (18b) a une forme de coupe transversale oblongue avec une extension principale dans une direction perpendiculaire à l'axe longitudinal du deuxième organe de support (18b).

10. Camion selon la revendication 9, **caractérisé en ce que** des rondelles doubles (24) sont prévues entre le deuxième organe de support (18b) et les têtes (25) des boulons (17) reçus dans les trous traversants (19) du deuxième organe de support, dans lequel chacune de ces rondelles doubles (24) a un premier trou traversant circulaire (26a) pour recevoir la tige de boulon (27) de l'un desdits boulons (17) et un deuxième trou traversant circulaire (26b) pour recevoir la tige de boulon (27) d'un autre desdits boulons (17).

11. Camion selon l'une quelconque des revendications 6 à 10, **caractérisé en ce que** chacun desdits trous de boulon (21a, 21b) sur la base de grue (10) est pourvu d'un filetage interne (33) configuré pour se mettre en prise avec un filetage externe (34) sur la tige de boulon (27) d'un boulon associé (17).

12. Camion selon la revendication 11, **caractérisé en ce que** :
- ledit premier raccord boulonné (16a) comprend un premier organe de montage allongé (35a) sous la forme d'une barre ou d'une plaque, qui est fixé rigidement à la base de grue (10) sur le dessous de celle-ci et qui est pourvu de trous de boulon filetés (21a) pour les boulons (17) du premier raccord boulonné ; et
- ledit deuxième raccord boulonné (16b) comprend un deuxième organe de montage allongé (35b) sous la forme d'une barre ou d'une plaque, qui est fixé rigidement à la base de grue (10) sur le dessous de celle-ci et qui est pourvu de trous de boulon filetés (21b) pour les boulons (17) du deuxième raccord boulonné.

13. Camion selon l'une quelconque des revendications 6 à 12, **caractérisé en ce que** les premier et deuxième organes de support (18a, 18b) sont fixés au sous-châssis (5) par soudage.
